# Europäisches Patentamt

# European Patent Office

# Office européen des brevets

(11) Publication number: **0 102 697**
**B1**

# EUROPEAN PATENT SPECIFICATION

(45) Date of publication of patent specification: **18.05.88**

(51) Int. Cl.⁴: **G 06 F 9/22**, G 06 F 9/38

(21) Application number: **83303680.9**

(22) Date of filing: **27.06.83**

(54) A timing control system in a data processor.

(30) Priority: **28.06.82 JP 110971/82**

(43) Date of publication of application:
**14.03.84 Bulletin 84/11**

(45) Publication of the grant of the patent:
**18.05.88 Bulletin 88/20**

(84) Designated Contracting States:
**DE FR GB**

(56) References cited:
**EP-A-0 027 851**
**US-A-3 656 123**
**US-A-4 032 895**

**IBM TECHNICAL DISCLOSURE BULLETIN, vol. 14, no. 12, May 1972, page 3807, New York, US; M.I. DAVIS et al.: "Stop instruction"**

**COMPUTER DESIGN, October 1979, pages 168-174, Concord, US; H. BRINEEN: "Variable microcycles improve speed of bipolar bit slice processors"**

(73) Proprietor: **FUJITSU LIMITED**
**1015, Kamikodanaka Nakahara-ku**
**Kawasaki-shi Kanagawa 211 (JP)**

(72) Inventor: **Ohnishi, Katsumi c/o FUJITSU LIMITED**
**Patent Department 1015 Kamikodanaka**
**Nakahara-ku Kawasaki 211 (JP)**
Inventor: **Mizushima, Yoshihiro c/o FUJITSU LIMITED**
**Patent Department 1015 Kamikodanaka**
**Nakahara-ku Kawasaki 211 (JP)**
Inventor: **Sato, Kiyosumi c/o FUJITSU LIMITED**
**Patent Department 1015 Kamikodanaka**
**Nakahara-ku Kawasaki 211 (JP)**

(74) Representative: **Billington, Lawrence Emlyn et al**
**HASELTINE LAKE & CO Hazlitt House 28**
**Southampton Buildings Chancery Lane**
**London WC2A 1AT (GB)**

## Description

This invention relates to a timing control system for various control timings in a data processor.

When processing machine instructions for external devices such as input/output units with micro programs, a first micro instruction is executed for sending some data to said external devices and then a second micro instruction is executed to process response signals sent back from such external devices.

Timing protection required for timing control of such external devices has been carried out using a timer or a complicated control circuit which confirms operation by exchanging response signals with the devices, namely by an interlock system. In other words, such timing protection has hitherto required specially designed complicated circuits or complicated control systems.

According to the present invention there is provided a timing control system in a data processor, characterised in that:

there is defined a dummy instruction including at least a first control field indicating a dummy instruction and a second control field indicating a number of dummy cycles; and

there is provided a decoder means which is arranged to detect a dummy instruction by decoding said first field, a counter means, associated with said decoder means, wherein an initial value depending on a value of said second field is set when a dummy instruction is detected, the counter means being updated for each specified cycle, and a detector means which is associated with said counter means and outputs a signal indicating the end of said dummy instruction when said counter value reaches the specified value, whereby

a time corresponding to a desired number of cycles will be protected (reserved) by such a dummy instruction.

An embodiment of the present invention may realize timing protection during execution of programs, particularly micro-programs without using a particular circuit, within an ordinary program or micro-program control circuit structure. In order to achieve this with a data processor, an instruction which executes a dummy cycle being invalid for processing is inserted at a desired position of the program. In the hereinbefore related example, this position may be between the first and second micro-instructions to which the timing protection is necessary. The number of repetitions of said dummy cycles is designated, and the protection time is set as a function of a product of the number of repetitions of said dummy cycles and the machine cyhcle time of the relevant processor.

For a better understanding of the present invention and to show how it may be put into effect, reference will now be made by way of example to the accompanying drawings in which:

Figure 1 is a block diagram of a pipe line type micro-program control circuit to which the present invention may be applied;

Figure 2 is a schematic diagram of an embodiment of the present invention; and

Figure 3 is a timing chart of the embodiment of the present invention.

An example of the invention may provide desired timing protection during program execution by inserting an instruction to. designate a dummy cycle at a position in a program requesting timing protection, and by controlling the number of dummy cycles with said instruction, and an embodiment described hereinafter is concerned with a micro program processor employing pipe line control. First, the basic operation of micro instructions in a pipe line control system will be explained.

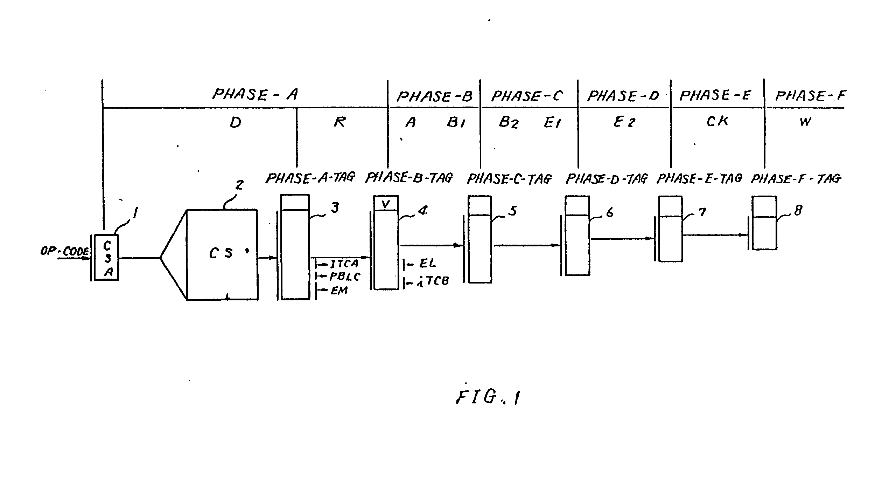

Figure 1 shows, for comparison, a pipe line circuit or mechanism and an execution flow of micro instructions. In this Figure 1, is an address register CSA of a control memory CS, and an OP code of machine instruction is set as the address of CS. 2 is the control memory CS itself in which micro programs are stored. 3 to 8 are TAG registers of successive stages of the pipe line, corresponding to PHASE-A to PHASE-F of the execution flow indicated respectively by PHASE-A-TAG to PHASE-F-TAG. The control bit of a micro-instruction read from the control memory CS in a D cycle described later is synchronized with the pipe line and shifted to PHASE-F-TAG from PHASE-A-TAG. The valid/invalid statue of TAG is indicated by a valid flag (V). Here, TAG means the control bit of a micro instruction transmitted in the TAG registers 3 to 8.

Processing of one micro-instruction is divided into the micro-operations of each cycle of: D, R, A, $B_1$, $B_2$, $E_1$, $E_2$, CK and W. Each micro operation is as follows:

(1) In the D cycle, the OP code of machine instruction is decoded and the micro-instruction words are read from the control memory 2.

(2) In the R cycle, data of the registers for address calculation are read on the basis of the micro instruction words.

(3) In the A cycle, address calculation is carried out.

(4) In the $B_1$, $B_2$ cycles, operand data is read from the buffer memory.

(5) In the $E_1$, $E_2$ cycles, operations are executed.

(6) In the CK cycle, data check is performed.

(7) In the W cycle, operation result data are written into registers.

The contents of each TAG register are used as explained above for controlling hardwares used for processing in each corresponding cycle, such as registers and operation units.

A hardware structure which may be used for the execution of dummy cycles in this embodiment is explained hereinafter.

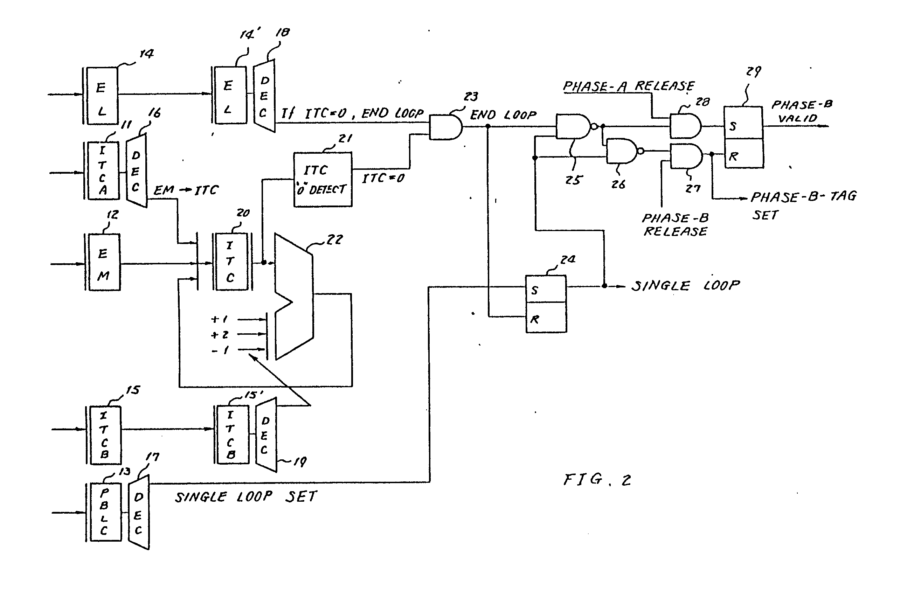

Figure 2 is a block diagram of such a structure and is connected to the pipe line structure of Figure 1. Of the micro instruction words read from the control memory CS, control fields designated ITCA, EM, PBLC, EL and ITCB are used in order to realize a dummy cycle. Functions of each field will be described later.

In Figure 2, 11 is an ITCA register; 12 is an EM register; 13 is a PBLC register; 14, 14' are EL registers; 15, 15' are ITCB registers; 16 to 19 are decoders; 20 is an ITC register; 21 is an ITC zero detection circuit; 22 is an operation unit; 23, 27, 28 are AND gates; 24 is a single loop latch; 25, 26 are NAND gates; and 29 is a PHASE-B-VALID latch. The registers 11, 12, 13, 14, 15 form a part of the PHASE-A-TAG register of Figure 1, while 14', 15', 20 form a part of the PHASE-B-TAG register of Figure 1. Each field of ITCA, EM and PBLC is read in the PHASE-A to the corresponding register 11, 12 and 13. In addition, the EL, ITCB fields are read in the PHASE-B to the registers 14, 15.

A dummy cycle in this embodiment is given for executing a loop for counting one by one the values present in the EM field in the ITC register, and the time until ITC=0 is obtained is utilised as the protection time.

The contents of the ITCA field in the ITCA register 11 indicate a dummy instruction and are decoded in the decoder 16 at the end of PHASE-A thereby to detect a dummy instruction, the control being carried out so that a value of the EM field, indicating a desired number of dummy cycles, is set to the ITC register 20 from the EM register 12.

The value of the EM field in the EM register 12 determines the number of times of loop repetition of the dummy cycle.

The contents of the PBLC field in the PBLC register 13 are decoded in the decoder 17 at the end of PHASE-A, and the control is carried out so that the single loop latch 24 is set.

The contents of the EL field in the EL register 14 are controlled in such a manner that the END loop signal is output from the AND gate 23, thereby to indicate the end of the dummy instruction, when the ITC zero detection circuit 21 has detected all-"0" state of the contents of the ITC register 20, which acts as a counter for the dummy loop cycles.

The contents of the ITCB field in the ITCB register 15' are decoded by the decoder 19 at the end of PHASE-B, and the control is carried out so that a value obtained by subtracting 1 from a value of the ITC register 20 is set to the ITC register.

When the single loop latch 24 is being set and the END LOOP is not ON, the PHASE-B valid flag is set again for each end of PHASE-A by the gates 25 to 28, but it is not reset even for the end of PHASE-B. Namely, the PHASE-B valid is kept ON. An output of AND gate 27 is a set enable signal to the PHASE-B-TAG register and the contents of PHASE-B-TAG are kept constant so long as this signal does not appear.

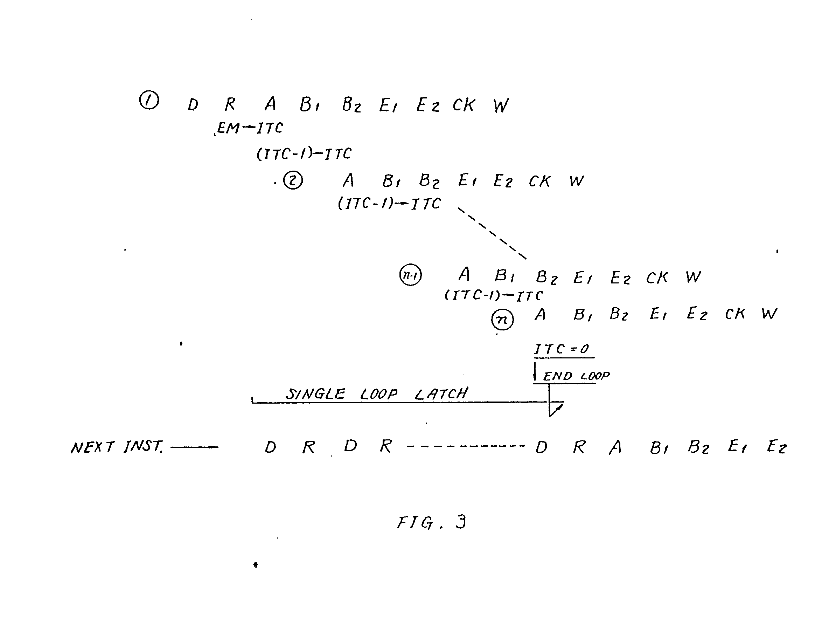

The dummy cycle and operation are explained with reference to the flow diagram of Figure 3. In this Figure 1 to n indicate the execution loop of Figure 3. In this Figure, 1 to n indicate the execution loop of micro instruction to be repeated by the dummy cycle. The NEXT instruction indicates the next instruction to be delayed for execution during the dummy cycle (namely, timing protection is reserved).

Flow 1:
At the end of PHASE-A, a value of EM is set (EM→ITC) to the ITC register 20 and then the single loop latch 24 is set. At the end of PHASE-B (PHASE-B-RELEASE), if the single loop latch 24 is ON and the END loop is OFF, the valid flag (V) of PHASE-B is not reset. Therefore, operation of PHASE-B is executed again and the NEXT instruction is inhibited to move from the PHASE-A to PHASE-B and nullified. In addition at the end of PHASE-B, operation (ITC-1)→ITC is executed.

Flow 2:
At the end of PHASE-B (ITC-1) is executed. Since the contents of ITC register 20 is not "0" and the single loop latch 24 is ON, the valid flag (V) of PHASE-B is not reset again and the NEXT instruction is inhibited to move to PHASE-B from PHASE-A. Thereafter, the flow 2 is repeated up to the flow n−1.

Flow n:
Since the contents of the ITC register 20 become "0" at the PHASE-B, the END loop signal is generated from the AND gate 23 and thereby an output of gate 27 turns ON and simultaneously the single loop latch 24 is reset. When the single loop latch becomes OFF, the dummy cycle terminates and the NEXT instruction is allowed to move to PHASE-B from PHASE-A by the output of gate 27, PHASE-B-TAG SET signal.

As explained above, a dummy cycle is generated for the $(EM+1)\times2\times(machine cycle)$ regarding a desired value present at the EM field and the timing is protected during such period. The method of realizing a dummy cycle is not restricted only to the above method, and other adequate methods can also be obtained as required.

As described above, a desired timing protection can be set easily only by inserting a single micro instruction in the existing micro program processor.

Preferably, the dummy instruction is a micro instruction and a machine instruction is processed in combination of said dummy instruction and another micro instruction.

The described embodiment relates to a timing control, for example a control for reserving a waiting time etc. On the occassion that a data processor sends or receives data to/from an external device, dummy cycles of a desired number of cycles are generated by a dummy instruction. In particular, a timing control system which is just suitable for the micro program system of a pipe line control system is disclosed. In this case the data processor provides a pipe line control circuit and the dummy instruction is reexecuted from a specified pipe line stage until the end of processing is detected.

Although an embodiment of the invention has been described and illustrated employing hardware it will be appreciated that, as an alternative, software may be utilised to provide an embodiment of the present invention.

## Claims

1. A timing control system in a data processor, characaterised in that;

there is defined a dummy instruction including at least a first control field (11) indicating a dummy instruction and a second control field (12) indicating a number of dummy cycles; and

there is provided a decoder means (16) which is arranged to detect a dummy instruction by decoding said first field (11), a counter means (20), associated with said decoder means (16), wherein an initial value depending on a value of said second field (12) is set when a dummy instruction is detected, the counter means (20) being updated for each specified cycle, and a detector means (21) which is associated with said counter means (20) and outputs a signal indicating the end of said dummy instruction when said counter value reaches the specified value, whereby

a time corresponding to a desired number of cycles will be protected (reserved) by such a dummy instruction.

2. The timing control system according to Claim 1, wherein said dummy instruction is a micro instruction and a machine instruction is processed in combination of said dummy instruction and another micro instruction.

3. The timing control system according to Claim 1 or 2, wherein said data processor provides a pipe line control circuit and said dummy instruction is reexecuted from a specified pipe line stage until said end detecting means detects the end of processing.

## Patentansprüche

1. Zeitlagensteuersystem in einem Datenprozessor, dadurch gekennzeichnet, daß:

ein Blindbefehl definiert ist, der wenigstens ein erstes Steuerfeld (11) enthält, das einen Blindbefehl anzeigt, und ein zweites Steuerfeld (12), das eine Anzahl von Blindzyklen anzeigt; und

eine Decodereinrichtung (16) vorgesehen ist, welche angeordnet ist, um einen Blindbefehl durch Decodieren des genannten ersten Feldes (11) zu detektieren, eine Zählereinrichtung (20), die der genannten Decodereinrichtung (16) zugeordnet ist, bei der ein anfänglicher Wert, abhängig von einem Wert des genannten zweiten Feldes (12) gesetzt wird, wenn ein Blindbefehl detektiert wird, wobei die Zählereinrichtung (20) für jeden spezifizierten Zyklus aktualisiert wird, und eine Detektoreinrichtung (21), die der genannten Zählereinrichtung (20) zugeordnet ist und ein Signal ausgibt, das das Ende des genannten Blindbefehls anzeigt, wenn der genannte Zählerwert der spezifizierenten Wert erreicht, wodurch

eine Zeit, die einer gewünschten Anzahl von Zyklen entspricht, durch solch einen Blindbefehl geschützt (reserviert) wird.

2. Zeitlagensteuersystem nach Anspruch 1, bei dem der genannten Blindbefehl ein Mikrobefehl ist und ein Maschinenbefehl in Kombination mit dem genannten Blindbefehl und einem anderen Mikrobefehl verarbeitet wird.

3. Zeitlagensteuersystem nach Anspruch 1 oder 2, bei dem der genannte Datenprozessor eine Leitungssteuerschaltung bildet und der genannte Blindbefehl von einer spezifizierten Leitungsstufe erneut ausgeführt wird, bis die genannte Enddetektoreinrichtung das Ende der Verarbeitung detektiert.

## Revendications

1. Système de commande de synchronisation dans un processeur de données, caractérisé en ce que:

une instruction fictive est définie qui comprend au moins une première zone de commande (11) indiquant une instruction fictive et une deuxième zone de commande (12) indiquant un nombre de cycles fictifs; et

il est prévu un moyen décodeur (16) qui est agencé pour détecter une instruction fictive en décodant la première zone (11), un moyen compteur (20), associé au moyen décodeur (16), dans lequel une valeur initiale fonction d'une valeur de la deuxième zone (12) est établie quand une instruction fictive est détectée, le moyen compteur (20) étant mis à jour pour chaque cycle spécifié, et un moyen détecteur (21) qui est associé au moyen compteur (20) et engendre en sortie un signal indiquant la fin de l'instruction fictive quand la valeur de compteur atteint la valeur spécifiée,

un temps correspondant à un nombre voulu de cycles étant, de la sorte, protégé (réservé) par cette instruction fictive.

2. Système de commande de synchronisation selon la revendication 1, dans lequel l'instruction fictive est un micro-instruction et une instruction machine est traitée en combinaison de l'instruction fictive et d'une autre micro-instruction.

3. Système de commande de synchronisation selon l'une quelconque des revendications 1 et 2, dans lequel le processeur de données fournit un circuit de commande en pipeline et l'instruction fictive est réexécutée à partir d'un étage de pipeline sécifié jusqu'à ce que le moyen de détection de fin détecte la fin du traitement.

| PHASE - A | | PHASE-B | PHASE-C | PHASE-D | PHASE-E | PHASE-F |
|---|---|---|---|---|---|---|
| D | R | A $B_1$ | $B_2$ $E_1$ | $E_2$ | CK | W |

PHASE-A-TAG  PHASE-B-TAG  PHASE-C-TAG  PHASE-D-TAG  PHASE-E-TAG  PHASE-F-TAG

OP-CODE

C S A    1

CS    2

3

V    4

5

6

7

8

├─ ITCA
├─ PBLC
├─ EM

├─ EL
├─ ITCB

FIG. 1

FIG. 2

① D R A $B_1$ $B_2$ $E_1$ $E_2$ CK W
EM→ITC
(ITC-1)→ITC
② A $B_1$ $B_2$ $E_1$ $E_2$ CK W
(ITC-1)→ITC

(n-1) A $B_1$ $B_2$ $E_1$ $E_2$ CK W
(ITC-1)→ITC
(n) A $B_1$ $B_2$ $E_1$ $E_2$ CK W

ITC = 0
END LOOP

SINGLE LOOP LATCH

NEXT INST. —— D R D R ------------ D R A $B_1$ $B_2$ $E_1$ $E_2$

FIG. 3

0 102 697